# EUROPEAN PATENT SPECIFICATION

(11) **EP 1 054 818 B1**
(45) Date of publication and mention of the grant of the patent: **31.07.2002**
(21) Application number: 98962681.7
(22) Date of filing: 31.12.1998
(51) Int. Cl.: B65D 81/20, B60J 11/00, E04H 15/22

(54) **METHOD OF AND APPARATUS FOR THE STORAGE OF EQUIPMENTS, MACHINES, AND VEHICLES UNDER CONTROLLED ATMOSPHERE**
VERFAHREN UND VORRICHTUNG ZUM UNTER GEREGELTER ATMOSPHÄRE LAGERN VON EINRICHTUNGEN, MASCHINEN UND KRAFTFAHRZEUGEN
PROCEDE ET APPAREIL D'ENTREPOSAGE D'EQUIPEMENTS, DE MACHINES ET DE VEHICULES SOUS ATMOSPHERE CONTROLEE

(30) Priority: 05.01.1998 IT RM980002
(43) Date of publication of application: 29.11.2000
(73) Proprietor: Moscarelli, Edoardo, 00186 Roma (IT)
(72) Inventor: Moscarelli, Edoardo, 00186 Roma (IT)
(74) Representative: Sarpi, Maurizio
(86) International application number: IT9800381
(87) International publication number: WO9935054

(56) References cited:
- EP-A- 0 052 563
- WO-A-95/15887
- FR-A- 2 226 320
- GB-A- 2 264 963
- US-A- 5 029 933

## Description

The present invention relates to the storage of equipments containing iron parts which are susceptible of oxidation and, more particularly, a method and an apparatus for storing military means such as aircrafts, helicopters, tanks and/or parts thereof under a controlled atmosphere of inert gas so that both oxidation and accumulation of atmospheric dust as well as settlement of animals and development of plants are avoided. At the same time such military vehicles are kept hidden by camouflage textile envelopes to sensor means which operates for finding and locating them in the bands of the electromagnetic spectrum of the visible field (VIS), thermal infrared (TIR), radar operating at 3 to 140 GHz and ultraviolet rays UV.

It is known that an important problem is to keep materials efficient, especially those of strategic importance that are stored awaiting hypothetical use. Vehicles of considerable dimensions such as aircrafts or tanks do not find ever place under cover in hangars or stores. In most cases they are left outdoors on the ground or paved yards. Although such materials are stored in areas where the weather guarantees dry air and no rain, such as deserts, it is unquestionable that both oxidation and accumulation of dusts are significant troubles. Additionally, there is a not negligible danger of the settlement of animals and development of weeds.

There is also known, from WO-95-15887, a method for inerting packaging covers wherein the object to be packaged is placed into a sealed envelope, wherein all the operations are carried out mantaining the internal pressure of the envelope equilibrated with the external atmospheric pressure. Said known method also requires the extraction of the atmosphere present into the sealed envelope before the subsequent injection of inert gas.
A drawback consists in the fact that said envelopes are very vulnerable in presence of wind, also of little entity. Such vulnerability is due to the fact that the material that constitutes the envelope (e.g. fabric) flutters because of the blowing of the wind and this may frequently cause tears that can make the envelope itself unusable in a very short time.

The present invention seeks to solve the above problems by enclosing the single vehicle to be stored into a sealed textile envelope, blowing an inert gas under a light overpressure into such envelope, and keeping the pressure under control in order to restore the initial pressure automatically if a predetermined critical threshold is exceeded, as disclosed in appended claims 1 and 2.

Another object of the invention is to camouflage the single vehicle to be stored so that it cannot be easily found out by reconnaissance systems provided with sensors operating in the electromagnetic spectrum.

These objects are accomplished according to the invention by using a camouflage textile envelope for each vehicle which is airtight closed by heat seal between the sheets and the two cloth ends of the opening that is necessary for the assembling.

The fabric is preferably of polyester or polyamide fibre or the like which is coated by spreading PVC or another thermoplastic resin, natural and/or synthetic rubber onto both faces of the fabric with or without fabric reinforcement. The camouflage features of the fabric, in addition to the colour composition of the external face thereof, are obtained by adding suitable fillers capable of opposing the action of the sensors operating all over the electromagnetic spectrum during the spreading of PVC.

The closure of the opening which is necessary for bringing the armaments or parts thereof or other vehicles to be stored into the envelope is carried out by heat seal and/or mechanical gastight systems.

The description will be more readily understood with reference to the annexed sheets of drawing which show only by way of a not limiting example a preferred embodiment of the invention. In the drawings:
Fig. 1 is a diagram of an apparatus according to the invention;
Fig. 2 shows a perspective view of a closed envelope according to the invention;

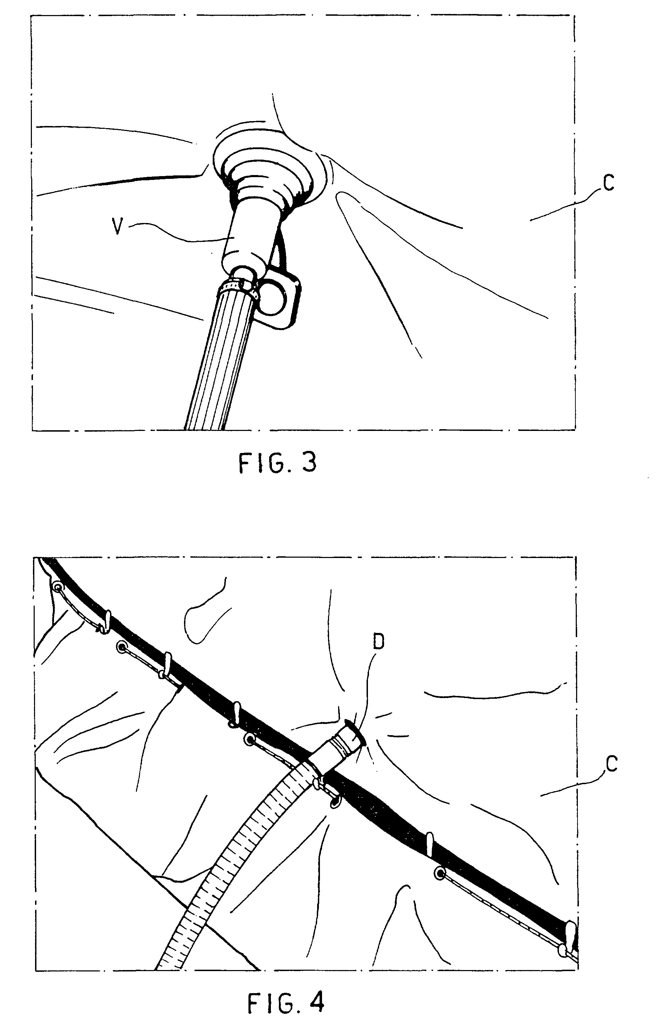

Fig. 3 shows a detail of the input valve for the inert gas;
Fig. 4 shows a detail of the air intake valve;

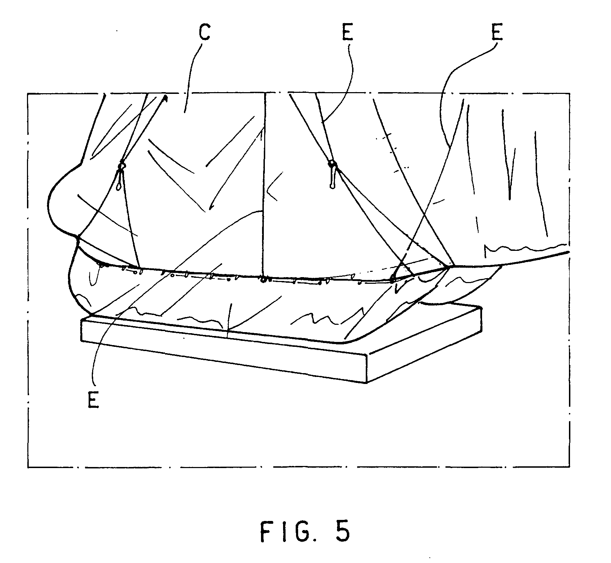

Fig. 5 shows the use of elastic ropes to keep the pressurized envelope close to the stored means.

With reference to the figures an apparatus according to the invention includes a plurality of textile envelopes C with dimensions suitable for the armaments and/or parts thereof to be stored inside them. Such envelopes C are made by means of suitable templates shaped according to a prototype of the armament to be stored.

Advantageously, in case of military use the fabrics used for the envelopes to be placed outdoors will have typically military features. Particularly the external side of the fabric under the form of a sheet and/or foil can show a "dull" surface with uniform or camouflaged colour or with several colours similar to those of the surrounding land with low brightness factor such as to have a gloss ≤ 2. Fabrics having milltary features and forming the envelopes will be provided with concealing characteristics for opposing the reconnaissance sensors operating at the wavelenghts of the electromagnetic spectrum during the production step by adding and/or putting between the carrying textiles necessary for giving mechanical resistance to the envelope and the spread PVC, or within the PVC itself, suitable fillers such as to provide the multispectrum camouflage features required by the army such as VIS, NIR, TIR, RADAR for loam or deserts, and UV for snowy lands, or by providing covers outside the envelopes.

Of course, the envelopes can also be made by fabrics and/or foils and/or sheets without any military features so that they can have different colours irrespective of the fabric surface gloss.

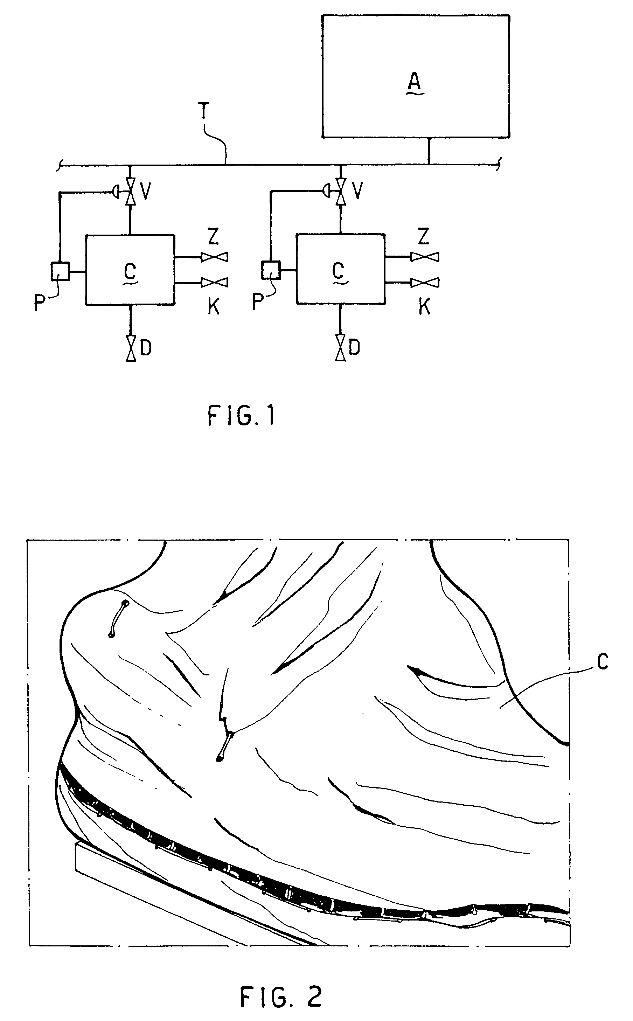

Each envelope C is provided with at least a valve D for the air intake, a valve V for the inert gas intake, a valve K for the actuation of control apparatus, and an inert gas electrovalve Z for adjusting the pressure in the envelope during the operation. As can be seen from Fig. 1, a feeder A of inert gas can be connected to a plurality of envelopes C at their input valves V through a pipeline T.

According to a peculiar feature of the invention the sealed envelopes C are micropressurized by inert gases, nitrogen being prevailing. Such a pressurization within the cover aims at avoiding that, in case of differential pressure with respect to the atmosphere equal to zero or a negative pressure value, the composition of the gas mixture inside the cover tends to restore the gas composition of the atmosphere because of the gradient concentration force. In this way, a percent amount of oxygen greater than 0.2% is prevented from being naturally restored within the envelopes, such an amount being, as known, the absolutely safe quantity capable of preventing oxidation processes on the surface of the stored means from being started and/or those oxidation processes already in progress before the storage from being continued.

Therefore, the micropressurization will prevent any change in the composition of the inert gas brought into the cover, thus preventing also the plastic materials of the stored means from becoming weak.

In order to avoid oscillations of the pressurized cover under the force of the wind, the fabric is kept tight to the stored means by several elastic ropes E so as to form several small bulges or swellings in the cover between adjacent ropes because of the pressurization.

The final conditions of a sealed, pressurized cover containing the stored means are reached through a plurality of air intake cycles for expelling the air contained in each small bulge of the cover as well as a plurality of inert gas inlet cycles until the oxygen contents in the gas mixture within the cover is lower than or equal to 0.2%.

In operation, the micropressurization is automatically kept within the regulation limits by a differential pressure switch P connected to each envelope C and able to control the opening of each valve V located in the inert gas supply circuit of the cover or the several cover bulges or swellings located side by side without any direct connection to one another, as the micropressurization decreases. Once the maximum predetermined value of micropressurization is restored, valve V closes automatically.

The inert gas is fed by a gas generator A and/or a set of cylinders and/or a liquid nitrogen tank. Each such system is provided with an automatically operated aid unit which is able to meet the inert gas delivery for a determined time in case of failure of the main gas generator unit or when the set of cylinders or the liquid nitrogen tank are empty. At the same time, an acoustic warning signal actuates the aid unit. Each such gas feeding system can supply several covers placed side by side with inert gas.

A continuous check of the system operation is carried out by a remote measurement system for measuring the percent content of oxygen both within the cover and in the feeding circuit. In addition, a continuous check of the operation of the gas production unit is carried out by sensors S connected to a processor that will supply the aid unit with a warning signal through a dedicated telephone line in case of any failure in the system operation even in case of vandal acts on the cover, the decrease of the predetermined operating micropressurization being also sensed.

Failing a remote measurement system, the check of the pressurization of each single cover can be carried out by providing an adjustable, calibrated clock in each envelope for measuring the opening time of each pressurization restoring electrovalve in the gas feeding circuit. As the exceeding of the predetermined opening time of the electrovalve is detected through a step relay by such a clock, the latter will actuate both a light signal and an acoustic signal both on site and at a remote distance for signalling the failure and actuating the aid unit.

Furthermore, each envelope is provided with a quantity of hygroscopic salts for removing traces of humidity from the stored means since it is not possible to remove humidity before the storage of such means.

## Claims

1. A method of storing equipments, machines, and vehicles under controlled atmosphere in order to avoid oxidation processes, deposits of atmospheric dust, and settlement of animals and/or development of plants, wherein the object to be stored is placed into an airtight envelope (C), and the atmosphere contained in the envelope is extracted before the subsequent injection of inert gas, wherein the following steps are provided in succession: blowing a slightly overpressurized inert gas into said envelope, keeping the pressure under control and restoring automatically the initial pressure value in case a predetermined critical pressure threshold is exceeded; **characterised in that**, in order to avoid oscillations of the pressurized cover under the force of the wind, the envelope is kept tight to the stored means by several elastic ropes so as to form under pressurization several small bulges or swellings in the cover between adjacent ropes.

2. An apparatus for storing equipments, machines, and vehicles under controlled atmosphere in order to avoid oxidation processes, deposits of atmospheric dust, comprising an sealed envelope (C) with suitable dimensions for containing the means to be stored, and means for extracting the atmosphere present into the sealed envelope before the subsequent injection of inert gas, a means being provided for blowing inert gases under a light overpressure into said envelopes, and a means being provided for the remote detection of the pressure in said envelopes and for actuating said blowing means automatically and at the right time so that the optimum conditions for keeping the inside atmosphere under control are restored; **characterised in that**, in order to avoid oscillations of the pressurized ,cover under the force of the wind, the envelope is kept tight to the stored means by several elastic ropes so as to form under pressurization several small bulges or swellings in the cover between adjacent ropes.

3. The apparatus of claim 2, **characterized in that** the envelope (C) is made of a fabric hermetically sealed by heat seal between the pieces of cloth, said fabric being preferably of polyester or polyamide fibre or the like coated by spreading PVC or another thermoplastic resin and/or natural and/or synthetic rubber on both faces thereof with or without fabric reinforcement.

4. The apparatus of claims 2 and 3, **characterized in that** the closure of the opening which is necessary for bringing the armaments or parts thereof or other vehicles to be stored into the envelope (C) is carried out by heat seal and/or mechanical gastight systems.

5. The apparatus of claims 2 to 4, **characterized in that** the envelopes (C) are made by means of suitable templates shaped according to a prototype of the armament to be stored.

6. The apparatus of claims 2 to 5, **characterized in that** the envelopes (C) are provided with a plurality of valves for the air intake (D), the inert gas intake (V), the actuation of control apparatus (K) for checking the operation.

7. The apparatus of claims 2 to 6, **characterized in that** the envelopes (C) are micropressurized by inert gases, nitrogen being prevailing.

8. The apparatus of claims 2 to 7, **characterized in that** there is provided a feeder (A) of inert gas which can be connected to a plurality of envelopes (C) at their input valves (V) through a pipeline (T).

9. The apparatus of claims 2 to 8, **characterized in that** in operation the micropressurization is automatically kept within the regulation limits by a differential pressure switch (P) connected to each envelope (C) and able to control the opening of each inert gas inlet valve (V) located in the envelope supply circuit as the micropressurization decreases.

10. The apparatus of claims 2 to 9, **characterized in that** in order to carry out the continuous check of the percent quantity of oxygen both within each envelope (C) and in the feeding line, each envelope is provided with sensors (S) which can be connected to a processor able to actuate the aid unit in case of any operation failure of the apparatus.

## Patentansprüche

1. Verfahren zur Aufbewahrung von Ausrüstungen, Maschinen und Fahrzeugen unter geregelter Atmosphäre zur Vermeidung von Oxydationsvorgängen, Ablagerungen von Umgebungsstaub und Einsiedlungen von Tieren und/oder Pflanzenentwicklung, wobei der aufzubewahrende Gegenstand in einer luftdichten Hülle (C) angeordnet wird und die in der Hülle bestehende Atmosphäre, vor der nachfolgenden Einspritzung eines inerten Gases, entfernt wird, worin folgende Verfahrensschritte in Reihenfolge vorgesehen sind: Einblasen in die Hülle eines inerten Gases unter leichtem Überdruck, den Druck unter Kontrolle halten, den Ausgangsdruck selbsttätig wiederherzustellen, wenn eine vorbestimmte kritische Druckwertschwelle überschritten wird, **dadurch gekennzeichnet, dass** zur Vermeidung von durch Windkraft verurachten Schwingungen der unter Druck stehenden Hülle, die Hülle durch mehrere elastische Seile dicht an den aufbewahrten Mitteln gehalten wird, so dass zwischen den benachbarten Seilen mehrere kleine unter Druck stehende Ausdehnungen oder Blasen gebildet werden.

2. Vorrichtung zur Aufbewahrung von Ausrüstungen, Maschinen und Fahrzeugen unter geregelter Atmosphäre zur Vermeidung von Oxydationsvorgängen, Ablagerungen von Umgebungsstaub, mit einer dichten, eine angebrachte Größe zur Enthaltung der aufzubewahrenden Mitteln aufweisenden Hülle (C) und mit Mitteln zum Ausblasen der in der dichten Hülle sich befindlichen Atmosphäre bevor der nachfolgenden Einspritzung eines inerten Gases, wobei ein Mittel zum Einblasen in die Hülle des inerten Gases unter einem leichten Überdruck und ein Mittel zur Fernanzeige des in der Hülle herrschenden Druckes und zum selbsttätigen und rechtzeitigen Antreiben des vorgenannten Einblasemittels vorgesehen sind, so das optimale Bedingungen für die Kontrolle der inneren Atmosphäre erhalten werden, **dadurch gekennzeichnet, dass** zur Vermeidung von Schwingungen der unter Druck stehenden Hülle durch Einwirkung der Windkraft, die Hülle durch mehrere Seile dicht an den aufbewahrten Mitteln gehalten wird, so dass zwischen den benachbarten Seilen mehrere kleine unter Druck stehende Ausdehnungen oder Blasen gebildet werden.

3. Vorrichtung nach Anspruch 2, **dadurch gekennzeichnet, dass** die Hülle (C) aus einem Stoff besteht, der zwischen den Gewebestücken dicht warmversiegelt ist, wobei der vorgenannte Werkstoff vorzugsweise aus Polyester- oder Polyamidfibern oder dgl. hergestellt und durch ein beiderseitiges Aufspritzen von PVC oder eines anderen thermoplastischen Harzes und/oder künstlichen oder natürlichen Gummis, mit oder ohne Werkstoffverstärkung, verkleidet wird.

4. Vorrichtung nach einem der Ansprüche 2 und 3, **dadurch gekennzeichnet, dass** die zum Einbringen in die Hülle (C) der aufzubewahrenden Ausrüstungen oder deren Teile oder der Fahrzeuge notwendige Öffnung durch Warmschweissen und/oder durch mechanische gasdichte Systeme geschlossen wird.

5. Vorrichtung nach einem der Ansprüche 2 bis 4 **dadurch gekennzeichnet, dass** die Hüllen (C) durch angebrachte, entsprechend eines Musters der aufzubewahrenden Ausrüstung gebildete Schablone hergestellt werden.

6. Vorrichtung nach einem der Ansprüche 2 bis 5, **dadurch gekennzeichnet, dass** die Hüllen (C) mit mehreren Ventilen für die Luft (D), das Inertgas (V) und zum Antrieb von zur Steuerung von Arbeitsvorgängen vorgesehen Einrichtungen versehen sind.

7. Vorrichtung nach einem der Ansprüche 2 bis 6, **dadurch gekennzeichnet, dass** die Hüllen (C) durch Inertgas, vorzugsweise Stickstoff, unter Mikrodruck gestellt werden.

8. Vorrichtung nach einem der Ansprüche 2 bis 7, **dadurch gekennzeichnet, dass** ein Inertgasspeisetank (A) vorgesehen ist, der mit einer Mehrzahl von Hüllen (C) durch deren Eintrittventilen (V) vermittels einer Leitung (T) verbindbar ist.

9. Vorrichtung nach einem der Ansprüche 2 bis 8, **dadurch gekennzeichnet, dass** in Betrieb die Mikrodrückhöhe automatisch durch einen Differentialdruckschalter (P) innerhalb der Steuergrenzen gehalten wird, wobei der Differentialdruckschalter (P) mit jeder Hülle (C) verbunden ist und ein jedes im Speisekreis der Hülle enthaltenes Inertgasventil (V) bei Senkung des Mikrodruckes zu öffnen vermag.

10. Vorrichtung nach einem der Ansprüche 2 bis 9, **dadurch gekennzeichnet, dass** zur kontinuierlichen Kontrolle des Prozentgehaltes von Sauerstoff sei es in jeder Hülle (C) sei es in der Speiseleitung, jede Hülle mit Fühlern (S) versehen ist, die mit einem eine Hilfsanordnung im Falle einer Betriebsstörung der Vorrichtung anzutreiben den anzutreibenden Prozessor verbunden sind.

## Revendications

1. Procédé pour conserver des équipements, machines et véhicules sous une atmosphère contrôlée afin d'éviter des processus d'oxydation, dépôts de poussière atmosphérique et développements des animaux et/ou des plantes, dans lequel l'objet à conserver est placés dans une enveloppe étanche à l'air (C) et l'atmosphère contenue dans l'enveloppe est extraite avant la successive injection d'un gaz inerte et dans lequel les phases suivantes sont prévues en succession: insufflation d'un gaz inerte à une léger surpression dans la dite enveloppe, maintien de la pression sous contrôle et restauration automatique du valeur initial de la pression quand un prédéterminé seuil de pression critique est dépassé, **caractérisé en ce que** afin d'éviter des oscillations de l'enveloppe par la force du vent, l'enveloppe est tenue étroitement sur l'objet conservé par plusieurs cordes élastiques de façon à former sous la pressurisation une pluralité des petits regonflages ou gonflements de l'enveloppe entre les cordes adjacentes.

2. Dispositif pour conserver des équipements, machines et véhicules sous une atmosphère contrôlés afin d'éviter de processus d'oxydation, dépôts de poussière atmosphérique, comprenant une enveloppe étanche (C) de dimension approprié pour contenir des objets à conserver et des moyens pour extraire l'atmosphère présent dans l'enveloppe étanche avant la successive injection d'un gaz inerte, un moyen étant prévu pour l'insufflation du gaz inerte sous une léger surpression dans la dite enveloppe et un moyen étant prévu pour la détection à distance de la pression dans les dites enveloppes et pour actionner le dit moyen d'insufflation automatiquement et en temps utile, de façon à restaurer les conditions optimales pour maintenir sous contrôle l'atmosphère intérieure, **caractérisé en ce que** afin d'éviter des oscillations de l'enveloppe pressurisés sous la force du vent, l'enveloppe est tenue étroitement sur l'objet conservé par plusieurs cordes élastiques, de façon à former une pluralité de petits regonflages ou gonflements de l'enveloppe entre les cordes adjacentes.

3. Dispositif selon la revendication 2, **caractérisé en ce que** l'enveloppe (C) est faite d'un tissu hermétiquement fermé par un soudure à chaud entre des buts de tissu, ledit tissu étant préférablement formé de fibres de polyester ou polyamide ou similaires, revêtues par vaporisation de PVC ou d'un autre résine thermoplastique et/ou naturelle et/ou synthétique sur leur deux faces, avec ou sans renforcement du tissu.

4. Dispositif selon les revendications 2 et 3, **caractérisé en ce que** l'ouverture nécessaire pour l'introduction des équipements ou parties des mêmes ou des autre véhicules à conserver dans l'enveloppe (C) est fermée par soudure à chaud et/ou par systèmes mécaniques d'étanchéité à gaz.

5. Dispositif selon les revendications 2 à 4, **caractérisé en ce que** les enveloppes (C) sont faites au moyens des gabarits appropriés, façonnés selon un modèle d'équipement à stocker.

6. Dispositif selon le revendications 2 à 5, **caractérisé en ce que** les enveloppes (C) sont munies des plusieurs soupapes d'injection d'air (D), de gaz inerte (V) et d'entraînement d'appareil de contrôle (K) pour surveiller le fonctionnement.

7. Dispositif selon les revendications 2 à 6, **caractérisé en ce que** les enveloppes (C) sont micropressurisées par des gaz inertes, l'azote étant prédominant.

8. Dispositif selon les revendications 2 à 7, **caractérisé en ce que** il est prévu un réservoir d'alimentation (A) de gaz inerte, qui peut être joint à une pluralité des enveloppes (C) par leur soupapes d'injection (V) par un conduit (T).

9. Dispositif selon les revendications 2 à 8, **caractérisé en ce que** pendant le fonctionnement, la micropressurisation est maintenue automatiquement dans les limites de régulation par un commutateur à pression différentielle (P) joint à chaque enveloppe (C) est apte à contrôler l'ouverture de chaque soupape d'injection de gaz inerte (V) placée dans le circuit d'alimentation des enveloppes quand la micropressurisation diminue.

10. Dispositif selon les revendications 2 à 9, **caractérisé en ce que** afin d'effectuer le contrôle de la quantité pour cent d'oxygène dans chaque enveloppe (C) et dans le conduit d'alimentation, chaque enveloppe est munie des capteurs (S), qui peuvent être joints à un processeur apte à actionner l'unité auxiliaire en cas d'un fonctionnement défaillant du dispositif.
